# EUROPÄISCHE PATENTANMELDUNG

(11) **EP 0 748 985 A2**
(43) Veröffentlichungstag der Anmeldung: **18.12.1996**
(21) Anmeldenummer: 96108890.3
(22) Anmeldetag: 04.06.1996
(51) Int. Cl.: F24B 1/04

(54) **Umweltkachelofen**

(30) Priorität: 16.06.1995 DE 29509824 U
(71) Anmelder: Wegner, Ulrich, 42477 Radevormwald (DE)
(72) Erfinder: Wegner, Ulrich, 42477 Radevormwald (DE)
(74) Vertreter: Heiber, Margarita, Dr.

(57) **Zusammenfassung**

Die Erfindung betrifft einen umweltfreundlichen Kachelofen, dessen Ofenkörper (1) wie bei einem konventionellen Kachelofen auf einem Sockel (so) mit umlaufender Bank (ba) aus Mantel (ma) und Sims (si) aufgebaut sein kann, wobei der Ofenkörper (1) aber erfindungsgemäß wenigstens eine feuerungsunabhängige, beheizbare Kachelplatte (2) aufweist; daneben betrifft die Erfindung für den Bau eines solchen Kachelofens besonders geeignete Kachelplatten (2).

## Beschreibung

Die Erfindung betrifft einen Kachelofen und für den Aufbau des erfindungsgemäßen Kachelofens besonders geeignete Kachelplatten.

Kachelöfen sind seit langem als wohnbiologisch wertvolle Heizvorrichtungen bekannt. Sie werden vor allem deshalb geschätzt weil sie bei milder Temperatur der Außenfläche des Kachelmantels gleichmäßig Energie mit einem als besonders angenehm empfundenen Verhältnis von Strahlungs- und Konvektionswärme abgeben. Als Einrichtungselement trägt ein Kachelofen erheblich zur behaglichen Atmosphäre eines Raumes bei.

Bei Kachelöfen herkömmlicher Bauart steht diesen positiven Eigenschaften eine Reihe von Nachteilen gegenüber. Unter anderem verhindert die kosten- und zeitintensive Erstellung die sonst wünschenswerte weite Verbreitung von Kachelöfen. Hinzu kommt der nicht geringe Arbeits- und Kostenaufwand bei Heizbetrieb und Wartung. Zumindest bei Kachelöfen, die als Zusatzheizung zur zentralen Wärmeversorgung betrieben werden, ist ein weiterer Negativfaktor die Zusatzbelastung der Umwelt mit Verbrennungsprodukten, die neben der Schadstoffbelastung aus der zentralen Energieversorgung anfallen.
Außerdem muß der Bau herkömmlicher Kachelöfen im Regelfall aus Gründen der Statik und des Raumbedarfs schon bei der Neubauplanung berücksichtigt werden. Ein üblicher Kachelofen, sei es inform eines Grundofens oder inform eines Abwärmeofens verlangt zudem einen eigenen, der Kachelofendimension angepassten Schornstein. Die Vorschriften der jeweiligen Landesbauordnungen und Feuerungsverordnungen müssen hinsichtlich der Anforderungen an den Boden und den Aufbau eingehalten werden. Baugenehmigung und Bauabnahme sind im Regelfall erforderlich.
Die je nach Modell verschiedene, besonders bei Kachelöfen hoher Wärmespeicherkapazität aber große, Einbautiefe und die möglichen Statikprobleme durch das Gewicht eines Kachelofens herkömmlicher Bauart machen die nachträgliche Erstellung solcher Kachelöfens in fertige Gebäude, vor allem bei Fertighäusern, Fachwerkbauten sowie Mehr familieneigentumswohnanlagen und Mietshäusern schwierig bis unmöglich. Die Mitnahme eines konventionellen Kachelofens bei einem Umzug verbietet sich aufgrund seiner Bauweise.

Der Bau von Kachelmänteln, vor allem aber die inneren Ausmauerungen sind ohne die kostspielige Arbeit von fachlich versierten Kachelofensetzern kaum durchzuführen; dazu sind sie mit erheblichem Zeitaufwand verbunden.

Auch die Inbetriebnahme eines neugesetzten Kachelofens verlangt Arbeit und Zeiteinsatz. Damit ein Auseinandertreiben des Kachelofens vermieden wird, ist vorsichtiges, tage- bis wochenlang dauerndes 'Trockenheizen' mit besonders dosierten Brennstoffmengen erforderlich.
Als unbequem und unter heutigen Wohnverhältnissen häufig nicht realisierbar wird auch die notwendige Brennstoffvorratshaltung angesehen werden müssen. Dazu kommt die Notwendigkeit, die Feuerung von konventionellen Kachelöfen regelmäßig zu versorgen, so daß sich Pflichten häufen, die leicht als lästig empfunden werden.

Aufgabe der vorliegenden Erfindung ist es, die voranstehend beschriebenen Nachteile des Stands der Technik auszuräumen und einen Kachelofen zur Verfügung zu stellen, der
- ohne eigenen Schornstein betrieben werden kann,
- keine zusätzlichen, umweltbelastenden Verbrennungsrückstände liefert,
- schnelle, einfache und kostengünstige Erstellung ohne behördliche Auflagen ermöglicht,
- demontier- und remontierbar ist,
- ein freies Ofendesign mit beliebiger Anordnung von beheizten und unbeheizten Flächen (z.B. bei der Gestal tung von Wärmefächern und beheizbaren Sitzbänken) gestattet,
- einen weiten Spielraum bei Material, Form und Farbe der Ofenkacheln zulässt,
- mit sehr geringer Einbautiefe und sehr geringer Boden- und Wandbelastung realisiert werden kann,
- nach Aufstellung sofort betriebsbereit ist,
- ohne Wartungsaufwand bequem und sauber gehandhabt werden kann,
- keine besondere Brennstoffvoratshaltung erfordert und
- keinen besonderen behördlichen Betriebsauflagen unterliegt.

Diese Aufgabe wird erfindungsgemäß durch einen Kachelofen nach Anspruch 1 gelöst. Die Unteransprüche 2 bis 6 beziehen sich auf besonders zweckmäßige Ausführungsformen des erfindungsgemäßen Kachelofens. Besonders geeignete Kachelplatten zur Realisierung des erfindungsgemäßen Kachelofens sind in den Ansprüchen 7 bis 11 angegeben.

Nachstehend wird ein Ausführungsbeispiel der Erfindung anhand der Zeichnung näher erläutert.

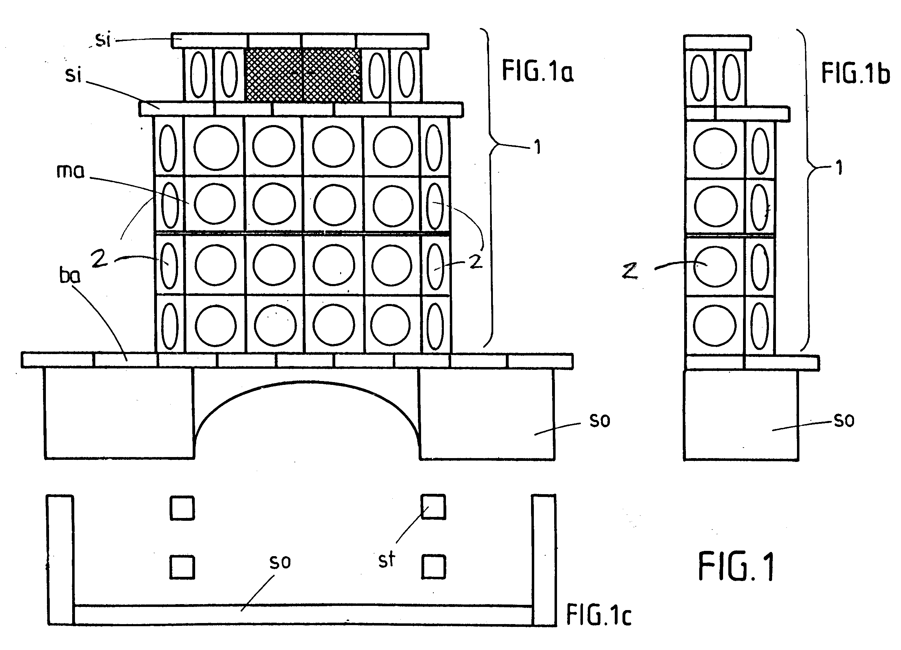

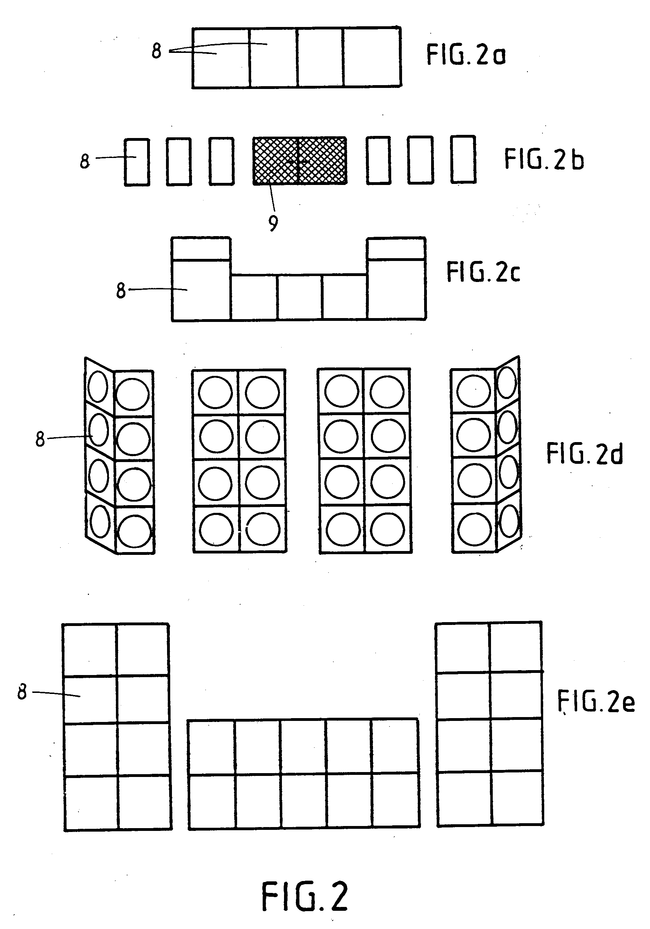

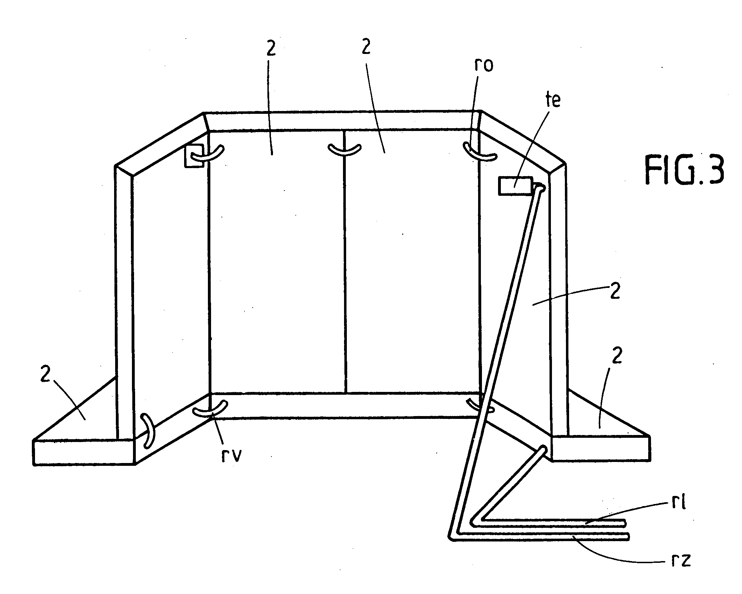

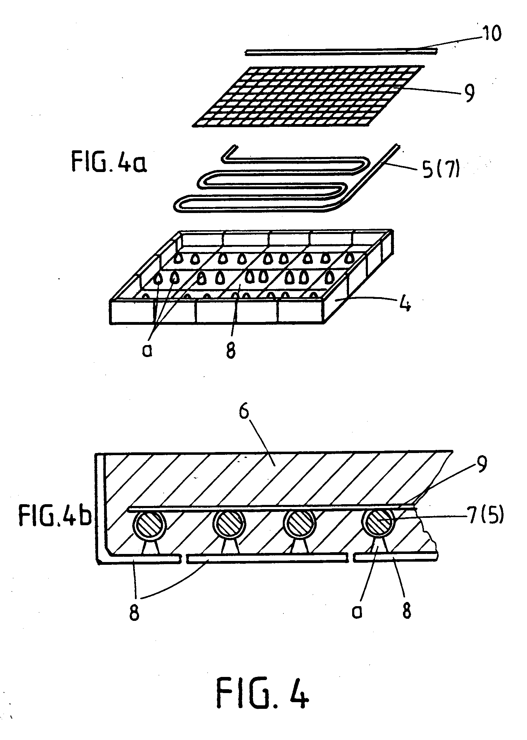

In der Zeichnung
- zeigen die Figuren 1a und 1b das äußere Erscheinungsbild einer möglichen Form des erfindungsgemäßen Kachelofens als Wandkachelofen mit umlaufender Sitzbank und die Figur 1c einen Querschnitt dem entsprechenden Abstützung,
- zeigen die Figuren 2a bis 2e Bauelemente für den Ofenkörper des in Fig. 1a und 1b dargestellten erfindungsgemäßen Kachelofens in form von beheizten und unbeheizten Kachelplatten, sowie eine Entlüftungstür in der Reihenfolge des Ofenkörperaufbaus,
- zeigt die Figur 3 eine Skizze zu Anschlüssen und Energieführung des erfindungsgemäßen Kachelofens an das jeweilige Heizenergiesystem, hier am Beispiel einer Warmwasserzentralheizung.
- zeigen die Figuren 4a und 4b den inneren Aufbau einer beheizbaren Kachelplatte für den erfindungsgemäßen Kachelofen, wobei Figur 4a Bauteile einer erfindungsgemäße Kachelplatte in der Reihenfolge ihrer Zusammenfügung skizziert; und Figur 4b einen Querschnitt durch eine derartige fertige Kachelplatte wiedergibt.

Die Figuren 1a, 1b verdeutlichen, daß ein erfindungsgemäßer Kachelofen so gebaut werden kann, daß er äußerlich von einem konventionellen Kachelofen nicht unterscheidbar ist. Es ist eine Ausführungsform gezeigt, deren Ofenkörper (1) im Bereich der Simse (si) aus an sich bekannten, unbeheizten, vorgefertigten Kachelplatten besteht, während der in diesem Fall geradwandige Ofenmantel (ma) und die umlaufende Sitzbank (ba) des erfindungsgemäßen Kachelofens aus beheizbaren Kachelplatten (2) zusammengefügt sind.
Im hier dargestellten Fall wird der Ofenkörper (1) wegen der Gewichte, die die Sitzbank (ba) bei Benutzung aufnehmen muß, von einem Sockel (so) getragen, der aus dem Fachmann bekannten Materialien in an sich bekannter Weise gefertigt ist.

Figur 1c zeigt einen Querschnitt durch den Sockelbereich des in Figur 1a, b in Außenansicht gezeigten erfindungsgemäßen Kachelofens.
Stützen (st) im Ofeninnenraum sichern in diesem besonderen Beispielfall die Gesamtkonstruktion statisch ab, können aber je nach Ausmaß und Design des erfindungsgemäßen Kachelofens auch entfallen.

Die Figuren 2a bis 2e zeigen in ihrer Gesamtheit einen Bausatz aus Kachelplatten mit Entlüftungsgitter, der den Aufbau eines Kachelofens gemäß Figur 1 ermöglicht. Dem Fachmann geläufige Zusatzteile für Heizenergieanschluß und -regulierung sind nicht gezeigt.
Figur 2a zeigt eine rechteckige, in an sich bekannter Weise vorgefertigte Kachelplatte, bei der die einzelnen Kacheln (8) miteinander verfugt sind. Diese Kachelplatte bildet das obere Sims (si) des Ofenkörpers (1).
Figur 2b zeigt die einzelnen Kacheln (8), die bei Aufbau des erfindungsgemäßen Kachelofens zum Umbau für das Entlüftungsgitter (9) zusammengefügt werden. Das Entlüftungsgitter dient der Zirkulation der im Inneren des Ofenkörpers (1) gebildeten Wärmluft, und ist hier zweckmäßig als Tür ausgebildet, durch die gegebenenfalls das Innere des Ofenkörpers (1) zugänglich ist.
Figur 2c zeigt eine u-förmige, in an sich bekannter Weise vorgefertigte Kachelplatte, bei der die einzelnen Kacheln (8) miteinander verfugt sind. Diese Kachelplatte bildet das mittlere Sims (si) des Ofenkörpers (1).
Figur 2d zeigt die beiden als einfache rechteckige Flächen und die beiden als Eckelemente ausgebildeten, beheizbaren Kachelplatten (2), die zusammengefügt den Mantel (ma) des Ofenkörpers (1) beim erfindungsgemäßen Kachelofen in der in Figur 1a,b gezeigten Ausführungsform ergeben.

Figur 2e zeigt die drei als rechteckige Flächen ausgebildeten, beheizbaren Kachelplatten (2), die die umlaufende Sitzbank (ba) des Ofenkörpers (1) beim erfindungsgemäßen Kachelofen in der in Figur 1a,b gezeigten Ausführungsform ergeben.
Figur 3 skizziert das Innere des erfindungsgemäßen Kachelofens in der Ausführungsform gemäß Figur 1a,b im Bereich von Mantel (ma) und Sitzbank (ba).
Die Kachelplatten (2) sind hier an eine zentrale Heizwasserversorgung durch im oberen Bereich des Ofenkörpers (1) durch das Vorlaufrohr (rz) über einen Thermostaten (te) angeschlossen. Flexible Rohrverbindungen (rv) zwischen den beheizbaren Kachelplatten (2) dienen der Heizenergieversorgung aller beheizbaren Kachelplatten (2) des Ofenkörpers (1) Die Rückführung des Heizwassers in den Kreislauf erfolgt durch das im Bereich der Sitzbank (ba) angeschlossene Rücklaufrohr (rl).
Figur 4a zeigt die Bestandteile einer ebenen beheizbaren Kachelplatte (2) für den erfindungsgemäßen Kachelofen in der Ausführungsform gemäß Figuren 1a und 1b. Auf einer rechteckigen Kachellage (4), die zweckmäßig einen erhöhten Rand aufweist, ist ein Heizenergieträger (5) inform eines Heizrohrs (7) für Warmwasserdurchfluß angebracht, wobei hier Abstandhalter (a) zwischen Kachellage (4) und Heizenergieträger (5) angeordnet sind. Armierung, hier inform von Drahtgeflecht (9) erhöht die Stabilität der Kachelplatte (2). Es ist eine Randbewehrung (10) vorgesehen, hier gezeigt an einer Seite der beheizbaren Kachelplatte (2) inform eines Muniereisens, das sich über eine Seitenlänge der Kachelplatte (2) erstreckt.
Figur 4b zeigt anhand eines Querschnitts durch eine beheizbare Kachelplatte (2) Anordnung und Gestalt der Kacheln (8) am Rand und im Innenbereich der Kachelfläche (4) mit Abstandhaltern (a), Heizenergieträgern (5) inform von Heizrohren (7) sowie nd einer Armierung aus Drahtgeflecht (9) in der Einbettmasse (6).

Ein besonderer Vorteil der vorliegenden Erfindung ist die Anpassungsfähigkeit an beliebige zentrale Heizenergieversorgungssysteme wie Warmwasser-, Dampf-, oder Elektroheizung. Lediglich die in die beheizbaren Kachelplatten (2) eingebetteten Heizenergieträger (5) sind entsprechend zu wählen und mit Heizrohren (7), Heizstäben, Heizkabeln oder dergleichen zu versehen. Daneben wird je nach Steifigkeit des Heizenergieträgers (5) in der Einbettmasse (6) die Armierung schwächer oder stärker ausgelegt. Bei starren Heizenergieträgern (5), wie Heizrohren (7) für Warmwasserheizung wird selbstverständlich weniger Armierung erforderlich sein als bei flexiblen Heizenergieträgern (5), z.B. bei Heizschläuchen oder Heizkabeln für Elektroheizung, z.B. nach Art der Nachtstrom-Speicherheizung oder einer elektrischen Fußbodenheizung. Je nach dem verfügbaren Platz und dem Wärmespeicherbedarf kann die Dicke und auch die Zusammensetzung der Einbettmasse (6) in weitesten Grenzen variiert werden, wobei sich Schamottemörtel für die meisten Zwecke bewährt.

Als äußerst vorteilhaft unter Kostengesichtspunkten stellt sich die Möglichkeit der Lieferung des erfindungsgemäßen Kachelofenkörpers (1) als leicht transportierbarer Bausatz aus einfach montierbaren und demontierbaren Teilen dar. Die Kosten für Material und Aufstellung belaufen sich z.B. für das in Figur 1a und 1b gezeigte Modell des erfindungsgemäßen Kachelofens nur auf einen Bruchteil (ca. 30%) der Gesamtkosten für die Erstellung des entsprechenden Kachelofens in herkömmlicher Bauweise.
Sowohl die Herstellung als auch die Montage von beheizbaren Kachelplatten (2) als auch von an sich bekannten unbeheizten Kachelplatten ist ohne großen Arbeitsaufwand möglich. Der Zusammenbau von vorgefertigten unbeheizbaren Kachelplatten und beheizbaren Kachelplatten (2) zum Ofenkörper (1) ist ebenso handwerkliche Routine wie der Anschluß an die jeweilige zentrale Heizenergieversorgung.

Optisch lassen sich erfindungsgemäße Kachelöfen sehr ansprechend gestalten. Bezüglich der Farbe, der Art des Keramikmaterials und der Oberflächengestaltung der Kacheln (8) sind beim erfindungsgemäßen Kachelofen die Grenzen sehr weit gezogen.
Auch hinsichtlich Anzahl, Anordnung und räumlicher Gestaltung der dazu verwendeten beheizbaren Kachelplatten (2) ist die Variationsbreite groß. Außer ebenen, beheizbaren Kachelplatten (2) in Rechteckformat lassen sich auch, wie in Figur 2d gezeigt, beheizbare Kachelplatten (2) inform von Eckelementen fertigen. Daneben sind auch gewölbte beheizbare Kachelplatten (2) herstellbar. Auch der Umriß einer beheizbaren Kachelplatte (2) ist nicht auf Rechteckformen beschränkt, so daß auch extravagantes Ofendesign mithilfe der vorliegenden Erfindung realisiert werden kann.
Dagegen sind konventionelle Kachelöfen durch die technisch notwendige Anordnung von Feuerung und Zügen beschränkt, so daß sich z. B. Wärmefächer nicht in beliebiger Größe und an beliebiger Stelle einbauen lassen. Auch stößt der Bau voll und gleichmäßig beheizbarer, umlaufender Sitzbänke mit entsprechend beheizbarem Rückenteil in konventioneller Bauweise auf Schwierigkeiten, die durch den erfindungsgemäßen Einsatz von beheizbaren Kachelplatten (2) ausgeräumt werden.

Der erfindungsgemäße Kachelofen inform eines Bausatzes ist durch seine einfache Montier- und Demontierbarkeit besonders geeignet für nachträglichen Einbau und für Situationen, in denen die Mitnahmefähigkeit des Kachelofens und sein problemloser Wiederaufbau am neuen Ort im vordergrund steht.
Der erfindungsgemäße Kachelofen kann darüberhinaus aber auch dadurch realisiert werden, daß eine oder mehrere feuerungsunabhängige beheizbare Kachelplatten (2) im Rahmen eines hauptsächlich konventionell gebauten Kachelofens, Steinofens, Kamins oder dergleichen eingesetzt wird oder werden. Auf diese Weise ist es zum Beispiel möglich, außerhalb der eigentlichen Heizperiode und ohne die Feuerung inbetrieb zu nehmen, schnell und umweltfreundlich wohnbiologisch günstige, behagliche Wärme zu Verfügung zu stellen. Umwelt- und Arbeitsbelastung durch Inbetriebnahme der Feuerung bei kurzzeitig kühler Witterung können bei einem erfindungsgemäßen Kachelofen dieser Art vermieden werden.

## Patentansprüche

1. Kachelofen,
**dadurch gekennzeichnet, daß** der Ofenkörper (1) des Kachelofens wenigstens eine feuerungsunabhängige, beheizbare Kachelplatte (2) aufweist.

2. Kachelofen mach Anspruch 1,
**dadurch gekennzeichnet, daß** der Ofenkörper (1) außer einer oder mehreren beheiz baren Kachelplatte(n) (2) wenigstens eine unbeheizbare Kachelplatte (3) aufweist

3. Kachelofen nach Anspruch 1 oder 2,
**dadurch gekennzeichnet, daß** die beheizbare(n) Kachelplatte(n) (2) hinter ihrer Kaachellage (4) Heizenergiespender (5) enthält, die in einer festen Einbettmasse (6) verlegt sind, wobei die Einbettmasse (6) vorzugsweise aus Schamottemörtel besteht.

4. Kachelofen nach Anspruch 1, 2 oder 3,
**dadurch gekennzeichnet, daß** als Heizenergiespender (5) Heizrohre (7) eingesetzt sind, die vorzugsweise aus Edelstahl, besonders bevorzugt V4A-Edelstahl, bestehen.

5. Kachelofen nach Anspruch 1, 2 oder 3,
**dadurch gekennzeichnet, daß** er als Heizenergieträger (5) ein oder mehrere Heizkabel für Elektroheizung, bevorzugt nach Art einer Fußboden- oder Nachtstromspeicherheizung enthält.

6. Kachelofen nach einem der Ansprüche 1 bis 5,
**dadurch gekennzeichnet, daß** er inform eines Bausatzes vorliegt.

7. Kachelplatte, insbesondere für einen Kachelofen nach einem der vorhergehenden Ansprüche,
**dadurch gekennzeichnet, daß** sie als feuerungsunabhängige, beheizbare Kachelplatte (2) ausgebildet ist, die
- eine Kachellage (4) aus flächig angeordneten Kacheln (8) aufweist, die mit
- einer Einbettmasse (6) hinterfüttert ist, in der
- ein oder mehrere Heizenergiespender (5) angeordnet ist oder sind.

8. Kachelplatte nach Anspruch 7,
**dadurch gekennzeichnet, daß** die Einbettmasse (6) armiert ist, wobei die Armierung vorzugsweise aus Drahtgeflecht(en) (9), vorzugsweise inform von Estrichmatte, besteht.

9. Kachelplatte nach Anspruch 7 oder 8,
**dadurch gekennzeichnet, daß** die Kachelplatte (2) eine Randbewehrung (10), vorzugsweise inform von Muniereisen, aufweist.

10. Kachelplatte nach Anspruch 7, 8 oder 9
**dadurch gekennzeichnet, daß** die Einbettmasse (6) aus einem Schamottemörtel besteht.

11. Kachelplatte nach Anspruch 7, 8, 9 oder 10,
**dadurch gekennzeichnet, daß** sie als Heizenergieträger (5) ein oder mehrere, bevorzugt schlangenförmig gewundene(s) , Heizrohr(e) (7) vorzugsweise aus Edelstahl, besonders bevorzugt V4A-Edelstahl, enthält.

12. Kachelplatte nach Anspruch 7, 8, 9 oder 10,
**dadurch gekennzeichnet, daß** sie als Heizenergieträger (5) ein oder mehrere Heizkabel für Elektroheizung, bevorzugt nach Art einer Fußboden- oder Nachtstromspeicherheizung enthält.
